# EUROPÄISCHE PATENTSCHRIFT

(11) **EP 1 417 466 B1**
(45) Veröffentlichungstag und Bekanntmachung des Hinweises auf die Patenterteilung: **29.11.2006**
(21) Anmeldenummer: 02754492.3
(22) Anmeldetag: 02.08.2002
(51) Int. Cl.: G01L 9/00, G01L 23/16

(54) **OPTISCHE VORRICHTUNG ZUM MESSEN DES DRUCKES ODER DER KRAFT**
OPTICAL DEVICE FOR MEASURING PRESSURE OR FORCE
DISPOSITIF OPTIQUE POUR MESURER UNE PRESSION OU UNE FORCE

(30) Priorität: 16.08.2001 DE 10140823; 16.08.2001 DE 20113783 U
(43) Veröffentlichungstag der Anmeldung: 12.05.2004
(73) Patentinhaber: ADZ Nagano GmbH, 01458 Ottendorf-Okrilla (DE)
(72) Erfinder: ARNDT, Dietmar, 01465 Liegau-Augustusbad (DE); HEGEWALD, Reinhard, 01169 Dresden (DE); HELLFELD, Thomas, 01728 Bannewitz (DE); SCHMIDT, Lutz, 01323 Dresden (DE); STEIGER, Bernhard, 09669 Frankenberg (DE)
(74) Vertreter: Krause, Wolfgang
(86) Internationale Anmeldenummer: PCT/DE2002/002856
(87) Internationale Veröffentlichungsnummer: WO 2003/019127

(56) Entgegenhaltungen:
- EP-A- 1 026 493
- WO-A-86/07445

## Beschreibung

Die Erfindung betrifft optische Vorrichtungen zum Messen des Druckes oder der Kraft mit einer elektromagnetischen Strahlungsquelle und einer Druckmembran oder einer Biegefeder mit einer die elektromagnetischen Strahlen der elektromagnetischen Strahlungsquelle wenigstens teilweise reflektierenden Fläche.

In der DE 39 24 185 C1 (Faseroptischer Drucksensor), der DE 30 16565 A1 (Vorrichtung zur Messung und Überwachung des Druckes innerhalb eines begrenzten, schwer zugänglichen Raumes) und der EP 0 825 428 A2 (Integrierter optoelektronischer Verbrennungsdrucksensor) gelangen die elektromagnetischen Strahlen von jeweils einer Strahlungsquelle über Lichtleitkabel zur Druckmembran und die reflektierten Strahlen über Lichtleitkabel zu Fotodetektoren. Die Enden der Lichtleitkabel sind dabei jeweils so gegenüber der Druckmembran angeordnet, dass die austretenden Strahlen senkrecht auf die Druckmembran fallen. Weiterhin enden die Lichtleitkabel unmittelbar nebeneinander gegenüber der Druckmembran. Dadurch gelangen in Abhängigkeit der Deformation der Druckmembran Teile der reflektierten Strahlen zu den Enden der Lichtleitkabel, wo diese eingekoppelt und zu den Fotodetektoren weitergeleitet werden. Je stärker die Deformation der Druckmembran ist, um so geringer ist die Intensität der Strahlung, die zu den Fotodetektoren gelangt.
Der Nachteil bei diesen Lösungen besteht insbesondere darin, dass nur ein kleiner Teil der reflektierten Strahlen zu den Fotodetektoren weitergeleitet wird. Deren Empfindlichkeit bestimmt damit im Wesentlichen die Messung des Druckes gegenüber der Druckmembran. Insbesondere sehr kleine Drücke oder Druckänderungen sind nur begrenzt messbar.

EP 0455241 A, FR 2 720 827 A und US 4 687 927 A beschreiben jeweils optische Drucksensoren.

Der Erfindung liegt das Problem zugrunde, zum Einen den Druck von Fluiden oder fließfähigen Stoffen im stationären und/oder im fließenden Zustand insbesondere so zu messen, dass auch sehr kleine Druckabweichungen im Fluid oder fließfähigen Stoff erfassbar sind, oder zum Anderen insbesondere kleine durch angreifende Kräfte hervorgerufene mechanische Deformationen an einer Biegefeder zu messen.

Dieses Problem wird mit den im Patentanspruch 1 aufgeführten Merkmalen gelöst.

Die erfindungsgemäßen optischen Vorrichtungen zum Messen des Druckes oder der Kraft zeichnen sich insbesondere dadurch aus, dass unter anderem auch kleinste Druckabweichungen von Fluiden oder anderen fließfähigen Stoffen im stationären und/oder im fließenden Zustand oder auch kleinste mechanische Deformationen an Biegefedern gemessen werden können. Das wird dadurch erreicht, dass die Strahlen der elektromagnetischen Strahlungsquelle auf die Druckmembran oder die Biegefeder mit der wenigstens teilweise reflektierenden Fläche fallen und in dem reflektierten Strahlengang und vor dem ersten Fotodetektor für diese Strahlen und in diese hineinragend wenigstens ein Bereich des fest platzierten Körpers oder des fest platzierten Körpers mit einer Reflexionsschicht angeordnet ist. Mit einer Druckänderung an der Druckmembran oder einer Kraftänderung an der Biegefeder werden die reflektierten Strahlen in Ausführungsformen mehr oder weniger durch den Körper gebeugt, nochmals reflektiert und/oder geteilt. Die in ihrer Richtung nicht veränderten Teilstrahlen der reflektierten Strahlen gelangen auf den ersten Fotodetektor, mit dem die Intensität dieses Teils der reflektierten Strahlen gemessen wird. Mit dem Körper im reflektierten Strahlengang ist die Messung der Intensität der auf den ersten Fotodetektor fallenden elektromagnetischen Strahlen nicht nur von einer ansonsten entscheidenden Position und Größe der strahlungsempfindlichen Fläche abhängig. Die Empfindlichkeit wird damit von
- der elektromagnetischen Strahlungsquelle,
- der Reflexionsfläche der Druckmembran oder der Biegefeder,
- der Position des Körpers und
- der Empfindlichkeit und der Geometrie der strahlungsempfindlichen Fläche des Fotodetektors oder ersten Fotodetektors
bestimmt, wobei nur gewährleistet sein muss, dass nicht gebeugte, gestreute und/oder nochmals reflektierte Strahlen und/oder Teilstahlen vollständig auf die strahlungsempfindliche Fläche des ersten Fotodetektors fallen. Die Empfindlichkeit der optischen Vorrichtung ist damit im Wesentlichen durch die Position des Körpers in den reflektierten Strahlen bestimmt. Mit dem zweiten Fotodetektor für die am Körper gebeugten, gestreuten, nochmals reflektierten und/oder abgeteilten Strahlen wird die Empfindlichkeit der erfindungsgemäßen optischen Vorrichtung nochmals erhöht. Damit eignen sich erfindungsgemäße optische Vorrichtungen für das Messen kleinerer Drücke oder kleinerer Deformationen der Biegefeder. Ein Körper in den reflektierten Strahlen führt weiterhin vorteilhafterweise dazu, dass ein einfach und ökonomisch herzustellendes Spritzgussgehäuse aus einem Kunststoff für die optische Vorrichtung nutzbar ist. Dabei sind die Positionen der Bestandteile durch Anschläge festlegbar, so dass eine automatisierte oder teilweise automatisierte Fertigung möglich ist.

Dass die elektromagnetische Strahlungsquelle und die Druckmembran oder die Biegefeder so angeordnet sind, dass die elektromagnetischen Strahlen der elektromagnetischen Strahlungsquelle nicht auf den Mittelpunkt der Druckmembran oder der Biegefeder fallen, führt zu einer Steigerung der Empfindlichkeit der erfindungsgemäßen optischen Vorrichtung. Bei Druck- oder Kraftänderungen sind die geometrischen Verformungen als Wölbung gegenüber der Normalen im Randbereich der Druckmembran oder der Biegefeder gegenüber dem Mittelbereich durch die nichtlineare Spannungsverteilung des vorhandenen Biegemoments am größten.

Eine schwarze Scheibe oder wenigstens eine schwarze Oberfläche des Körpers stellt einen strahlungsundurchlässigen Körper dar, der die darauf treffenden Strahlen absorbiert. Vorteilhafte Ausgestaltungen der Erfindung sind in den Patentansprüchen 2 bis 12.

Ein Prisma als Körper nach der Weiterbildung des Patentanspruchs 2 führt zur Ablenkung der reflektierten Strahlen. Dazu werden die winklig zueinander angeordneten Oberflächen des Prismas benutzt. Die reflektierten Strahlen werden dadurch geteilt. Zum Einen kann ein Teil der reflektierten Strahlen auf einen Bereich einer Oberfläche des Prismas fallen, wobei die Richtung dieser Strahlen bei Austritt der winklig dazu angeordneten Oberfläche geändert ist. Zum Anderen können die reflektierten Strahlen nach der Weiterbildung des Patentanspruchs 3 auf eine Kante des Prismas fallen, wobei durch die winklig zueinander angeordneten Oberflächen eine Strahlteilung erfolgt. In beiden Fällen ändern sich bei einer Ablenkung der Druckmembran oder der Biegefeder die Intensitäten der Teilstrahlen, wobei die Summe der Intensitäten gleich ist. Dadurch können auch sehr kleine Druck- oder Kraftänderungen gemessen werden.

Ein Gitter als Körper wenigstens teilweise in den reflektierten Strahlen nach der Weiterbildung des Patentanspruchs 4 führt zur teilweisen Beugung. Die Beugung erfolgt an den Rändern der Gitterstäbe. Durch die geometrischen Verhältnisse des Gitters können unterschiedliche Beugungseffekte auftreten, wobei Interferenzen und Streuungen der reflektierten Strahlen nach dem Gitter auftreten. Bei einer Änderung der Richtung der reflektierten Strahlen durch eine geometrische Veränderung der Druckmembran oder der Biegefeder entstehen unterschiedliche Interferenzmuster. Dadurch sind an benachbart angeordneten Fotodetektoren unterschiedliche Intensitäten messbar. Vorteilhafterweise ist der Abstand benachbarter Gitterstäbe nicht gleich, so dass eine relativ große räumliche Trennung von Intensitätsunterschieden erreichbar ist.

Die reflektierten Strahlen werden durch die Weiterbildung des Patentanspruchs 5 so beeinflusst, dass die Strahlposition geändert wird. Damit ändert sich die Intensität der reflektierten Strahlen, die danach auf die Fotodetektoren gelangen. Das wird dadurch erreicht, dass die in Richtung der reflektierten Strahlen weisende Oberfläche des Körpers oder der Körper so ausgestaltet ist, dass die reflektierten Strahlen ortsabhängig absorbiert, reflektiert oder transmittiert werden.

Eine in Strahlrichtung nach der elektromagnetischen Strahlungsquelle mindestens ein die elektromagnetischen Strahlen bei Eintritt so brechende und die elektromagnetischen Strahlen wenigstens einmal an einer Innenfläche oder einem Bereich überwiegend so reflektierende Einrichtung nach der Weiterbildung des Patentanspruchs 6 vergrößert den räumlichen Abstand zwischen Druckmembran oder Biegefeder auf der einen Seite und elektromagnetische Strahlungsquelle, Körper und den wenigstens einen Fotodetektor auf der anderen Seite. Mit dem Einsatz einer Einrichtung aus einem wärmebeständigen Stoff kann insbesondere der Druck auch von Fluiden oder fließfähigen Stoffen mit höheren Temperaturen gemessen werden.
Eine günstige Ausgestaltung der Einrichtung sind nach der Weiterbildung des Patentanspruchs 7 wenigstens zwei unmittelbar nebeneinander angeordnete planparallele Platten aus einem transparenten Stoff. Die planparallelen Platten sind dabei vorteilhafterweise so ausgebildet, dass die Eintrittsrichtung und die Austrittsrichtung der elektromagnetischen Strahlen und der reflektierten elektromagnetischen Strahlen gleich oder annähernd gleich sind. Dadurch ergeben sich äquivalente Anordnungen, so dass die elektromagnetische Strahlungsquelle, der Körper und der wenigstens eine Fotodetektor als ein Bauteil realisierbar und mit oder ohne der Einrichtung in Form z.B. der planparallelen Platten gegenüber der Druckmembran oder der Biegefeder einsetzbar sind. Dadurch ergibt sich ein universell einsetzbares Bauteil.

Eine Schaltungsanordnung nach der Weiterbildung des Patentanspruchs 8 ergibt am Ausgang ein elektrisches Signal, dass dem Verhältnis von Strahlleistung zu Differenz zwischen der Intensität der reflektierten elektromagnetischen Strahlen am ersten Fotodetektor und der nochmals reflektierten Strahlen am zweiten Fotodetektor. Damit ergeben auch kleinste Druck- oder Kraftänderungen einen relativ großen elektrischen Ausgangswert. Gleichzeitig können dadurch Schaltungsstrukturen mit niederohmigen Eingängen eingesetzt werden, so dass elektrische Störgrößen den Messwert nicht verfälschen oder Schutzmaßnahmen gegen derartige Störungen nicht notwendig sind.

Vorteilhafte elektromagnetische Strahlungsquellen sind nach der Weiterbildung des Patentanspruchs 9 ein Halbleiterlaser oder eine Lumineszenzdiode.

Nach der Weiterbildung des Patentanspruchs 10 sind die Fotodetektoren Fotodioden.
Derartige elektromagnetische Strahlungsquellen und Fotodetektoren sind jeweils auf einem Träger z.B. als Chip aus einem elektrischen Halbleiter integrierbar. Diese sind durch bekannte Techniken handhabbar, so dass eine ökonomische erfindungsgemäße optische Vorrichtung gegeben ist.

Günstige Ausgestaltungen der Druckmembran sind nach der Weiterbildung des Patentanspruchs 11 eine Platte, ein Wandbereich eines rohrförmigen Körpers oder ein rohrförmiger Körper. Insbesondere die Letztgenannten sind für die Messung des Druckes von fließenden Stoffen geeignet, da diese direkt in bestehende Leitungssysteme integrierbar sind.

Die Weiterbildung der erfindungsgemäßen optischen Vorrichtung nach Patentanspruch 12 ergibt eine kompakte Baugruppe, die durch die der Verbindung dienenden Elemente und/oder Konstruktionen leicht montierbar ist und in bestehende oder zu realisierende Leitungssysteme oder Kraftmesssysteme eingebunden werden kann. Derartige Elemente oder Konstruktionen sind z.B. Bohrungen, Bohrungen mit Gewinde, Gewindestifte oder Auskragungen für Klemmmontagen.

Ausführungsbeispiele der Erfindung sind in den Figuren 2 bis 6 dargestellt und werden im folgenden näher beschrieben.

Es zeigen:
- Fig. 1: eine prinzipielle Darstellung einer optischen Vorrichtung zum Messen des Druckes mit nur einem Fotodetektor,
- Fig. 2: eine prinzipielle Darstellung einer optischen Vorrichtung zum Messen des Druckes mit zwei Fotodetektoren,
- Fig. 3: eine prinzipielle Darstellung einer optischen Vorrichtung zum Messen des Druckes mit einem Prisma, wobei die reflektierten Strahlen auf eine Kante fallen,
- Fig. 4: eine prinzipielle Darstellung einer optischen Vorrichtung zum Messen des Druckes mit einem Prisma, wobei die reflektierten Strahlen auf eine Oberfläche fallen,
- Fig. 5: ein Blockschaltbild einer Schaltung zum Aufbereiten der elektrischen Signale der Fotodetektoren und
- Fig. 6: eine prinzipielle Darstellung einer optischen Vorrichtung zum Messen des Druckes mit einer Einrichtung mit mehrfacher Reflexion.

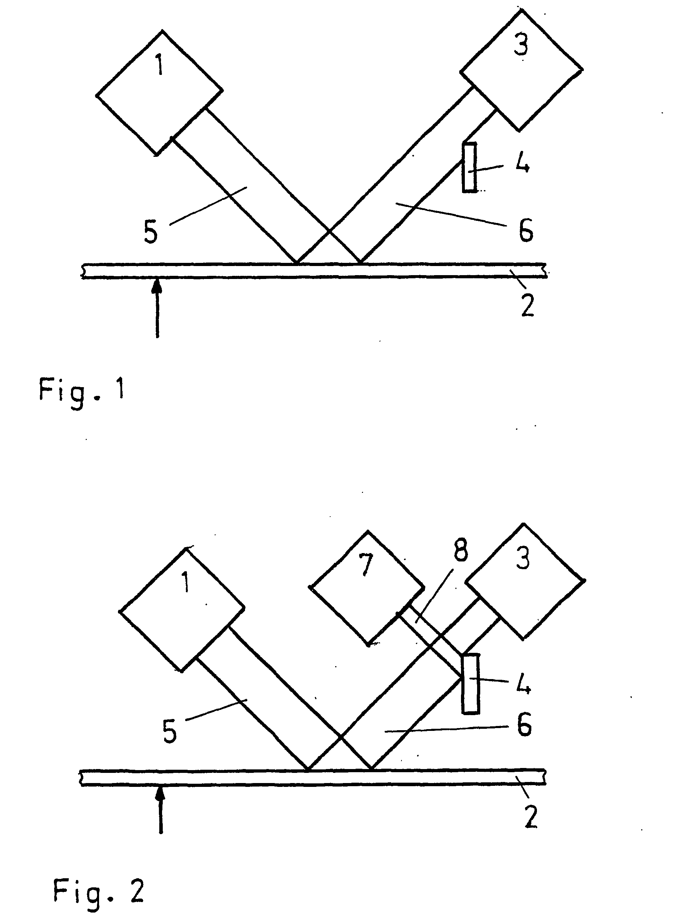

Eine optische Vorrichtung zum Messen des Druckes besteht aus einer elektromagnetischen Strahlungsquelle 1, einer Druckmembran 2 mit einer die elektromagnetischen Strahlen 5 der elektromagnetischen Strahlungsquelle 1 wenigstens teilweise reflektierenden Fläche, einem in die reflektierten Strahlen 6 hineinragenden Körper 4 und nur einem Fotodetektor 3.
Die elektromagnetische Strahlungsquelle 1 ist insbesondere ein Halbleiterlaser oder eine Lumineszenzdiode und der Fotodetektor 3 ist vorzugsweise eine Fotodiode. Die Druckmembran 2 ist eine Platte, wenigstens ein Bestandteil eines rohrförmigen Körpers oder ein rohrförmiger Körper.
Die elektromagnetische Strahlungsquelle 1 ist gegenüber der Druckmembran 2 so angeordnet, dass die elektromagnetischen Strahlen 5 mit einem Winkel zwischen 0 und kleiner/gleich 90° auf die reflektierende Fläche der Druckmembran 2 fallen, wobei sich die Auftrefffläche nicht im Mittelpunkt der Druckmembran 2 befindet. In den Strahlengang der dadurch reflektierten Strahlen 6 ist zum Einen der Körper 4 und der Fotodetektor 3 angeordnet. Der Körper 4 befindet sich dabei teilweise auch bei nicht mit einem Druck beaufschlagter Druckmembran 2 in den reflektierten Strahlen 6 und zwischen Fotodetektor 3 und Druckmembran 2. Der Körper 4 ist entweder eine schwarze Scheibe oder besitzt wenigstens eine schwarze Oberfläche. Dadurch wird ein Teil der reflektierten Strahlen 6 absorbiert, so dass ein Teil der reflektierten Strahlen 6 auf den Fotodetektor 3 fallen. Bei steigendem Druck sinkt der Anteil der auf den Fotodetektor 3 fallenden reflektierten Strahlen 6. In der Fig. 1 ist eine derartige optische Vorrichtung zum Messen des Druckes prinzipiell dargestellt.

### 1. Ausführungsbeispiel

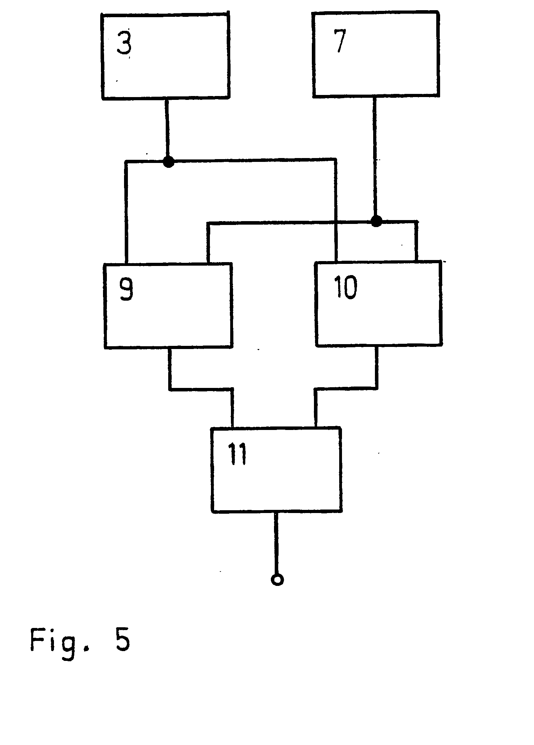

Eine optische Vorrichtung zum Messen des Druckes besteht in einem ersten Ausführungsbeispiel aus einer elektromagnetischen Strahlungsquelle 1, einer Druckmembran 2 mit einer die elektromagnetischen Strahlen 5 der elektromagnetischen Strahlungsquelle 1 wenigstens teilweise reflektierenden Fläche, einem Körper 4 in den reflektierten Strahlen 6 und einem ersten und einem zweiten Fotodetektor 3, 7 (Darstellung in der Fig. 2). Die elektromagnetische Strahlungsquelle 1 ist insbesondere ein Halbleiterlaser oder eine Lumineszenzdiode und die Fotodetektoren 3, 7 sind vorzugsweise Fotodioden. Die Druckmembran 2 ist eine Platte, wenigstens ein Bestandteil eines rohrförmigen Körpers oder ein rohrförmiger Körper.
Die elektromagnetische Strahlungsquelle 1 ist gegenüber der Druckmembran 2 so angeordnet, dass die elektromagnetischen Strahlen 5 mit einem Winkel zwischen 0 und kleiner/gleich 90° auf die reflektierende Fläche der Druckmembran 2 fallen, wobei sich die Auftrefffläche nicht im Mittelpunkt der Druckmembran 2 befindet. In den Strahlengang der dadurch reflektierten Strahlen 6 ist zum Einen der Körper 4 und der erste Fotodetektor 3 angeordnet. Der Körper 4 befindet sich dabei teilweise auch bei nicht mit einem Druck beaufschlagter Druckmembran 2 in den reflektierten Strahlen 6 und zwischen ersten Fotodetektor 3 und Druckmembran 2. Wenigstens die Oberfläche des Körpers 4, die in die reflektierten Strahlen 6 hineinragt, ist reflektierend ausgebildet, so dass ein Teil der reflektierten Strahlen 6 nochmals reflektierende Strahlen 8 sind. Im Strahlengang der nochmals reflektierten Strahlen 8 befindet sich der zweite Fotodetektor 7. Bei steigendem Druck sinkt der Anteil der auf den ersten Fotodetektor 3 fallenden reflektierten Strahlen 6 und steigt der Anteil der nochmals reflektierten Strahlen 8, die auf den zweiten Fotodetektor fallen. In der Fig. 2 ist eine derartige optische Vorrichtung zum Messen des Druckes prinzipiell dargestellt. In einer weiteren Ausführungsform können die Bestandteile der optischen Vorrichtung auch so angeordnet sein, dass der Anteil der auf den ersten Fotodetektor 3 fallenden Strahlen bei steigendem Druck steigt und der Anteil der auf den zweiten Fotodetektor 7 fallenden Strahlen sinkt.
Die elektrischen Ausgänge des ersten und des zweiten Fotodetektors 3, 7 sind mit den Eingängen einer Subtrahier- 9 und einer Addierschaltung 10 und deren Ausgänge mit den Eingängen einer Dividierschaltung 11 verbunden (Darstellung in der Fig. 5).

### 2. Ausführungsbeispiel

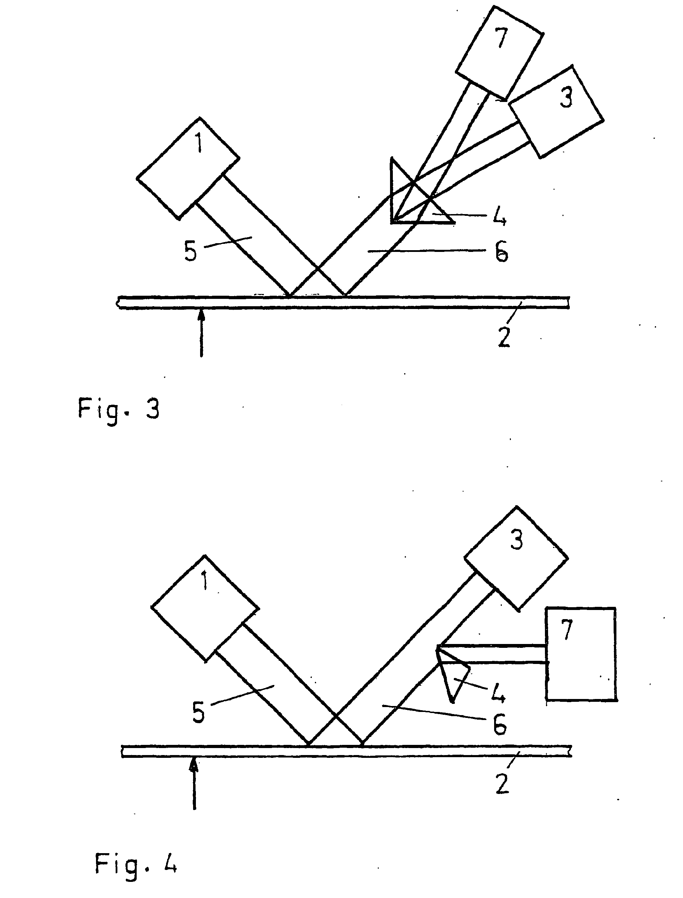

Eine optische Vorrichtung zum Messen des Druckes besteht in einem zweiten Ausführungsbeispiel aus einer elektromagnetischen Strahlungsquelle 1, einer Druckmembran 2 mit einer die elektromagnetischen Strahlen 5 der elektromagnetischen Strahlungsquelle 1 wenigstens teilweise reflektierenden Fläche, einem Körper 4 in den reflektierten Strahlen 6 und einem ersten und einem zweiten Fotodetektor 3, 7 (Darstellung in den Fig. 3 und 4).
Die elektromagnetische Strahlungsquelle 1 ist insbesondere ein Halbleiterlaser oder eine Lumineszenzdiode und die Fotodetektoren 3, 7 sind vorzugsweise Fotodioden. Die Druckmembran 2 ist eine Platte, wenigstens ein Bestandteil eines rohrförmigen Körpers oder ein rohrförmiger Körper.
Die elektromagnetische Strahlungsquelle 1 ist gegenüber der Druckmembran 2 so angeordnet, dass die elektromagnetischen Strahlen 5 mit einem Winkel zwischen 0 und kleiner/gleich 90° auf die reflektierende Fläche der Druckmembran 2 fallen, wobei sich die Auftrefffläche nicht im Mittelpunkt der Druckmembran 2 befindet. In den Strahlengang der dadurch reflektierten Strahlen 6 ist der Körper 4 angeordnet.
In einer ersten Ausführungsform ist der Körper 4 ein Prisma. Die reflektierten Strahlen 6 fallen auf die Kante, die durch die beiden rechtwinklig zueinander angeordneten Oberflächen gebildet wird (Darstellung in der Fig. 3). Vorteilhafterweise befindet sich die Kante des Prismas bei nicht mit einem Druck beaufschlagter Druckmembran 2 in der Mitte oder annähernd in der Mitte der reflektierten Strahlen 6. Durch das Prisma werden die reflektierten Strahlen 6 geteilt. In Strahlrichtung der beiden Teilstrahlen befinden sich der erste und der zweite Fotodetektor 3, 7.
In einer zweiten Ausführungsform ist der Körper 4 ein Prisma, das sich nur teilweise in dem Strahlengang der reflektierten Strahlen 6 befindet. Die reflektierten Strahlen 6 fallen vorzugsweise bei nicht mit einem Druck beaufschlagter Druckmembran 2 teilweise auf eine Oberfläche (Darstellung in der Fig. 4). Ein erster Teil der reflektierten Strahlen 6 gelangt dabei unbeeinflusst auf den ersten Fotodetektor 3. Der zweite Teil der reflektierten Strahlen 6 wird durch das Prisma als Körper 4 abgelenkt. Dadurch werden die reflektierten Strahlen 6 geteilt. Der zweite Teil der reflektierten Strahlen 6 gelangt auf den zweiten Fotodetektor 7.
In einer dritten Ausführungsform weist der Körper 4 ein Gitter auf. Mit einem unterschiedlichen Abstand benachbarter Gitterstäbe ergeben sich unterschiedliche Beugungseffelcte der reflektierten Strahlen 6, so dass quasi eine Bewegung der reflektierten Strahlen 6 bewirkt wird. Der erste und der zweite Fotodetektor 3, 7 sind nebeneinander angeordnet.
Bei steigendem Druck sinkt der Anteil der auf den ersten Fotodetektor 3 und steigt der Anteil der auf den zweiten Fotodetektor 7 fallenden reflektierten Strahlen 6. In einer weiteren Ausführungsform können die Bestandteile der optischen Vorrichtung auch so angeordnet sein, dass der Anteil der auf den ersten Fotodetektor 3 fallenden Strahlen bei steigendem Druck steigt und der Anteil der auf den zweiten Fotodetektor 7 fallenden Strahlen sinkt.
Die elektrischen Ausgänge des ersten und des zweiten Fotodetektors 3, 7 sind mit den Eingängen einer Subtrahier- 9 und einer Addierschaltung 10 und deren Ausgänge mit den Eingängen einer Dividierschaltung 11 verbunden (Darstellung in der Fig. 5).

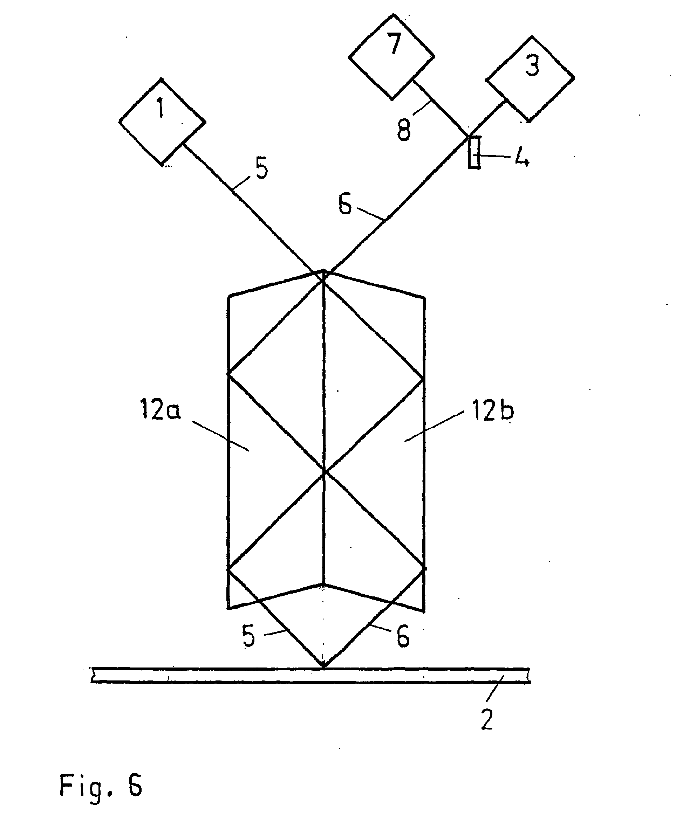

In weiteren Ausführungsformen der optischen Vorrichtungen zum Messen des Druckes entsprechend des ersten oder des zweiten Ausführungsbeispiels kann in Strahlrichtung nach der elektromagnetischen Strahlungsquelle 1 mindestens ein die elektromagnetischen Strahlen 5 bei Eintritt so brechende und die elektromagnetischen Strahlen 5 wenigstens einmal an einer Innenfläche oder einem Bereich überwiegend so reflektierende Einrichtung angeordnet sein, dass zum Einen die elektromagnetischen Strahlen 5 mit einem Winkel zwischen 0° und kleiner/gleich 90° auf die reflektierende Fläche der Druckmembran 2 fallen und dass zum Anderen die reflektierten Strahlen 6 in einer anderen als der Einfallsrichtung wieder aus der Einrichtung austreten (Darstellung in der Fig. 6). Die Einrichtung besteht vorzugsweise aus wenigstens zwei unmittelbar nebeneinander angeordneten planparallelen Platten 12a, 12b aus einem transparenten Stoff.
Die Eintrittsrichtung und die Austrittsrichtung der elektromagnetischen Strahlen 5 und der reflektierten elektromagnetischen Strahlen 6 sind gleich oder annähernd gleich. Die Anordnung des Körpers 4 und des ersten und des zweiten Fotodetektors 3, 7 entsprechen denen des ersten oder des zweiten Ausführungsbeispiels.

Anstelle der Druckmembranen 2 in den Ausführungsbeispielen eins und zwei einschließlich deren Ausführungsformen kann in weiteren Ausführungsformen die jeweilige Druckmembran 2 eine Biegefeder zur Kraftmessung sein. In den Darstellungen der Fig. 1 bis 4 und 6 ist dazu die Druckmembran 2 eine gerade Biegefeder. Der Querschnitt der geraden Biegefeder kann dabei sowohl mehreckig ausgeführt sein als auch die Form eines Kegelschnittes aufweisen. Die Biegefeder ist dabei einseitig, mehrseitig oder insbesondere bei Anwendung einer Biegeplatte mit allen Seiten eingespannt. Die Kraft wirkt auf die Biegefeder ein, so dass eine Deformation des Körpers der Biegefeder gleich derer der Druckmembran 2 in den Ausführungsbeispielen eins und zwei einschließlich deren Ausführungsformen vorhanden ist. Auf der sich deformierenden Oberfläche oder Oberflächen befindet sich die die elektromagnetischen Strahlen 5 der elektromagnetischen Strahlungsquelle 1 wenigstens teilweise reflektierenden Fläche. Die Ausbildung und die Anordnung der elektromagnetischen Strahlungsquelle 1, des Körpers 4, entweder des Fotodetektors 3 oder des ersten und des zweiten Fotodetektors 3, 7 und der die elektromagnetischen Strahlen 5 bei Eintritt so brechenden und die elektromagnetischen Strahlen 5 wenigstens einmal an einer Innenfläche oder einem Bereich überwiegend so reflektierenden Einrichtung, insbesondere in Form der planparallelen Platten 12a, 12b, entsprechen denen des ersten und zweiten Ausführungsbeispiels einschließlich deren Ausführungsformen.
In weiteren Ausführungsformen kann die Biegefeder auch eine Spiralfeder mit Windungszwischenraum, eine Drehfeder, eine gerade Torsionsfeder oder eine zylindrische Schraubenfeder sein, wobei wenigstens ein Bereich der sich bei Kraftänderung deformierenden Oberfläche die die elektromagnetischen Strahlen 5 der elektromagnetischen Strahlungsquelle 1 wenigstens teilweise reflektierenden Fläche ist oder aufweist.

Vorteilhafterweise können zumindest die elektromagnetische Strahlungsquelle 1, der Fotodetektor 3 oder sowohl der erste als auch der zweite Fotodetektor 3, 7 und der Körper 4 die Bestandteile eines Gehäuses sein, dass insbesondere mit der Verbindung dienenden Elementen und/oder Konstruktionen versehen ist.

## Patentansprüche

1. Optische Vorrichtung zum Messen des Druckes oder der Kraft mit einer elektromagnetischen Strahlungsquelle (1) und einer Druckmembran (2) oder einer Biegefeder, wobei die elektromagnetische Strahlungsquelle (1) gegenüber der Druckmembran (2) oder der Biegefeder so angeordnet ist, dass die elektromagnetischen Strahlen (5) mit einem Winkel zwischen 0 und kleiner/gleich 90° auf eine nicht mittige und die elektromagnetischen Strahlen reflektierende Fläche der Druckmembran (2) oder der Biegefeder fallen, bei nicht mit einem Druck oder einer Kraft und/oder mit einem Druck oder einer Kraft beaufschlagter Druckmembran (2) oder Biegefeder wenigstens ein Bereich eines fest platzierten Körpers (4) in die reflektierten Strahlen (6) der elektromagnetischen Strahlungsquelle (1) hineinragt und im Strahlengang der reflektierten Strahlen nach dem Körper (4) ein erster Fotodetektor (3) für reflektierte Strahlen (6) angeordnet ist, **dadurch gekennzeichnet, dass** bei nicht mit einem Druck oder einer kraft und/oder mit einem Druck oder einer kraft beaufschlagter Druckmembran (2) oder Biegefeder wenigstens ein Bereich des fest platzierten Körpers (4) oder einer Reflexionsschicht des fest platzierten Körpers (4) in die reflektierten Strahlen (6) der elektromagnetischen Strahlungsquelle (1) so hineinragt, dass ein Teil der reflektierten Strahlen (6) überwiegend gebeugt wird, gestreut wird, nochmals reflektiert und/oder abgeteilt wird und dass nach dem Körper (4) ein zweiter Fotodetektor (7) für die gebeugten, gestreuten, nochmals reflektierten oder abgeteilten Strahlen angeordnet ist.

2. Optische Vorrichtung nach Patentanspruch 1, **dadurch gekennzeichnet, dass** der Körper (4) ein Prisma ist.

3. Optische Vorrichtung nach Patentanspruch 2, **dadurch gekennzeichnet, dass** sich eine Kante des Prismas in den reflektierten Strahlen (6) befindet.

4. Optische Vorrichtung nach Patentanspruch 1, **dadurch gekennzeichnet, dass** der Körper (4) ein Gitter ist, dass sich das Gitter teilweise oder vollständig in den reflektierten Strahlen (6) befindet und dass der Abstand der Gitterstäbe gleich ist oder dass der Abstand benachbarter Gitterstäbe nicht gleich ist.

5. Optische Vorrichtung nach Patentanspruch 1, **dadurch gekennzeichnet, dass** die in Richtung der reflektierten Strahlen (6) weisende Oberfläche des Körpers (4) oder der Körper (4) so ausgestaltet ist, dass die reflektierten Strahlen (6) ortsabhängig absorbiert, reflektiert oder transmittiert werden.

6. Optische Vorrichtung nach Patentanspruch 1, **dadurch gekennzeichnet, dass** in Strahlrichtung nach der elektromagnetischen Strahlungsquelle (1) mindestens ein die elektromagnetischen Strahlen (5) bei Eintritt so brechende und die elektromagnetischen Strahlen (5) wenigstens einmal an einer Innenfläche oder einem Bereich überwiegend so reflektierende Einrichtung angeordnet ist, dass zum Einen die elektromagnetischen Strahlen (5) mit dem Winkel zwischen 0° und kleiner/gleich 90° auf die reflektierende Fläche der Druckmembran (2) oder der Biegefeder fallen und dass zum Anderen die von der Druckmenbran (2) oder Biege feder reflektierten Strahlen (6) wiederum in der Einrichtung wenigstens einmal an einer Innenfläche oder einem Bereich reflektiert werden und in einer anderen als der Einfallsrichtung wieder aus der Einrichtung austreten.

7. Optische Vorrichtung nach Patentanspruch 6, **dadurch gekennzeichnet, dass** die Einrichtung aus wenigstens zwei unmittelbar nebeneinander angeordneten planparallelen Platten (12a, 12b) aus einem transparenten Stoff besteht und dass die Eintrittsrichtung und die Austrittsrichtung der elektromagnetischen Strahlen (5) der elektromagnetischen Strahlungsquelle (1) und der von der Druckmembran (2) oder der Biegefeder reflektierten elektromagnetischen Strahlen (6) gleich oder annähernd gleich sind.

8. Optische Vorrichtung nach Patentanspruch 1, **dadurch gekennzeichnet, dass** die elektrischen Ausgänge der Fotodetektoren (3, 7) mit den Eingängen einer Subtrahier- (9) und einer Addierschaltung (10) und die Ausgänge der Subtrahier- (9) und der Addierschaltung (10) mit den Eingängen einer Dividierschaltung (11) zusammengeschaltet sind.

9. Optische Vorrichtung nach Patentanspruch 1, **dadurch gekennzeichnet, dass** die elektromagnetische Strahlungsquelle (1) ein Halbleiterlaser oder eine Lumineszenzdiode ist.

10. Optische Vorrichtung nach Patentanspruch 1, **dadurch gekennzeichnet, dass** der erste und der zweite Fotodetektor (3, 7) Fotodioden sind.

11. Optische Vorrichtung nach Patentanspruch 1, **dadurch gekennzeichnet, dass** die Druckmembran (2) plattenförmig ausgebildet ist oder dass die Druckmembran (2) wenigstens ein Bestandteil eines rohrförmigen Körpers oder ein rohrförmiger Körper ist.

12. Optische Vorrichtung nach Patentanspruch 1, **dadurch gekennzeichnet, dass** zumindest die elektromagnetische Strahlungsquelle (1), wenigstens ein Fotodetektor (3, 7) und der Körper (4) die Bestandteile eines Gehäuses sind und dass das Gehäuse mit der Verbindung dienenden Elementen und/oder Konstruktionen versehen ist.

## Claims

1. Optical device to measure pressure or force using an electromagnetic radiation source (1) and a pressure membrane (2) or a flexible spring, wherein the electromagnetic radiation source (1) is arranged towards the pressure membrane (2) or flexible spring so that the electromagnetic rays (5) impinge at an angle between 0° and less than or equal to 90° on an off-centre area of pressure membrane (2) or flexible spring reflecting the electromagnetic rays, whereat the pressure membrane (2) or flexible spring to which no pressure or force and/or pressure or force is applied, at least one section of a firmly placed body (4) projects into the reflected rays (6) of the electromagnetic radiation source (1) and a first photodetector (3) for the reflected rays (6) is arranged in the optical path of the reflected rays downstream of the body (4) **characterized in that** in the case of a pressure membrane (2) or flexible spring to which no pressure or force and/or pressure or force is applied, at least one section of the firmly placed body (4) or a reflective layer of the firmly placed body (4) projects into the reflected rays (6) of the electromagnetic radiation source (1) so that part of the reflected rays (6) is mainly diffracted, diffused, rereflected and/or separated and that a second photodetector (7) is arranged downstream of the body (4) for the diffracted, diffused, rereflected or separated rays.

2. Optical device according to Claim 1, **characterized in that** the body (4) is a prism.

3. Optical device according to Claim 2, **characterized in that** an edge of the prism is located in the reflected rays (6).

4. Optical device according to Claim 1, **characterized in that** the body (4) is a grating, the grating is partially or entirely located in the reflected rays (6) and the distance of the bars is equal or the distance of neighbouring bars is not equal.

5. Optical device according to Claim 1, **characterized in that** the surface of the body (4) showing in the direction of the reflected rays (6) or the body (4) is designed so that the reflected rays (6) are absorbed, reflected or transmitted locus-dependently.

6. Optical device according to Claim 1, **characterized in that** in the direction of rays downstream of the electromagnetic radiation source (1) at least one device so refracting the electromagnetic rays (5) upon entry and mainly so reflecting the electromagnetic rays (5) at least once at an inside surface or in an area, is arranged so that, on the one hand, the electromagnetic rays (5) impinge on the reflecting surface of the pressure membrane (2) or the flexible spring at an angle between 0° and less than or equal to 90°, and, on the other hand, the rays (6) being reflected from the pressure membrane (2) or flexible spring are at least once reflected at an inner surface or an area, and exit the device in a direction other than the direction of incidence.

7. Optical device according to Claim 6, **characterized in that** the device consists of at least two plane-parallel plates directly arranged side by side (12a, 12b) of transparent material and that the direction of incidence and direction of exit of the electromagnetic rays (5) of the electromagnetic radiation source (1) and the electromagnetic rays (6) reflected by the pressure membrane (2) or flexible spring are equal or almost equal.

8. Optical device according to Claim 1, **characterized in that** the electrical outputs of the photodetectors (3, 7) are interconnected with the inputs of a subtracting circuit (9) and adding (10) circuit and the outputs of the subtracting circuit (9) and adding circuit (10) interconnected with the inputs of a dividing circuit (11).

9. Optical device according to Claim 1, **characterized in that** the electromagnetic radiation source (1) is a semiconductor laser or a luminescent diode.

10. Optical device according to Claim 1, **characterized in that** the first and the second photodetector (3, 7) are photodiodes.

11. Optical device according to Claim 1, **characterized in that** the pressure membrane (2) is of plate-like shape or the pressure membrane (2) is at least one component of a tube-like body or is a tube-like body.

12. Optical device according to Claim 1, **characterized in that** at least the electromagnetic radiation source (1), at least one photodetector (3, 7) and the body (4) are parts of a casing and that the casing is provided with elements and/or structures serving as connection.

## Revendications

1. Dispositif optique pour mesurer la pression ou la force au moyen d'une source de radiation électromagnétique (1) et d'une membrane de pression (2) ou d'un ressort spiral, la source de radiation électromagnétique (1) étant disposée par rapport à la membrane de pression (2) ou bien au ressort spiral de telle sorte que les rayons électromagnétiques (5) tombent, dans un angle de entre 0 et 90°, sur une surface non centrée de la membrane de pression (2) ou du ressort spiral qui, elle, reflète les rayons électromagnétiques, et qu'en cas de ce que la membrane de pression (2) ou le ressort spiral ne sont pas admis de pression ni de force et/ou d'une pression/force, au moins une partie d'un corps stationnaire (4) est situé au niveau des rayons reflétés (6) de la source de radiation électromagnétique (1), et que dans la zone d'impact des rayons reflétés située derrière le corps (4) est disposé un premier détecteur photoélectrique (3) pour les rayons reflétés (6), **caractérisé par le fait qu'**en cas de ce que la membrane de pression (2) ou le ressort spiral ne sont pas admis de pression ni de force et/ou d'une pression/force, au moins une partie d'un corps stationnaire (4) est situé au niveau des rayons reflétés (6) de la source de radiation électromagnétique (1), de telle sorte qu'une partie des rayons reflétés (6) soit plutôt diffractée et dispersée avant d'être reflétée de nouveau et/ou d'être pliée, et qu'un deuxième détecteur photoélectrique (7) pour les rayons diffractés et dispersés puis reflétés de nouveau ou pliés est disposé derrière le corps (4).

2. Dispositif optique selon la revendication 1, **caractérisé par le fait que** le corps (4) est constitué par un prisme.

3. Dispositif optique selon la revendication 2, **caractérisé par le fait qu'**un côté du prisme est situé dans la zone d'impact des rayons reflétés (6).

4. Dispositif optique selon la revendication 1, **caractérisé par le fait que** le corps (4) est constitué par une grille qui elle est située, en totalité ou en partie, dans la zone d'impact des rayons reflétés (6) et que l'écart entre les différents éléments de la grille est constant ou non.

5. Dispositif optique selon la revendication 1, **caractérisé par le fait que** la surface du corps (4) ou des corps (4) qui montre vers les rayons reflétés (6) est conçue de telle sorte que les rayons reflétés (6) soient absorbés, réfléchis de nouveau ou transmis en fonction de leur zone d'impact.

6. Dispositif optique selon la revendication 1, **caractérisé par le fait qu'**en direction du rayonnement et derrière la source de radiation (1) est disposé au moins un mécanisme qui réfracte les rayons électromagnétiques (5) lors de leur impact, et que ce mécanisme est disposé au moins une fois au niveau d'une surface intérieure ou d'une zone d'impact de rayonnement, la disposition du mécanisme étant telle que d'une part, les rayons électromagnétiques (5) tombent, dans un angle de entre 0 et 90°, sur la surface réfléchissante de la membrane de pression (2) ou le ressort spiral, et que d'autre part, les rayons (6) reflétés par la membrane de pression (2) ou le ressort spiral seront réfléchis au moins encore une fois au niveau d'une surface intérieure ou d'une zone d'impact du mécanisme réfractant, ces rayons électromagnétiques sortant après dans une autre direction que celle d'entrée.

7. Dispositif optique selon la revendication 6, **caractérisé par le fait que** le mécanisme réfractant est composé d'au moins deux plaques disposée parallèlement l'une à côté de l'autre (12a, 12b) qui, elles, sont fabriquées en matière transparente, et que tant les directions d'entrée et de sortie des rayons électromagnétiques (5) de la source de radiation électromagnétique (1) que celles des rayons électromagnétiques (6) de la membrane de pression (2) ou du ressort spiral sont identiques ou presque.

8. Dispositif optique selon la revendication 1, **caractérisé par le fait que** les sorties électriques des détecteurs photoélectriques (3, 7) sont interconnectées aux entrées d'un circuit soustracteur (9) et d'un circuit addeur (10), et que les sorties des circuits soustracteur (9) et addeur (10) sont interconnectées aux entrées d'un circuit divideur (11).

9. Dispositif optique selon la revendication 1, **caractérisé par le fait que** la source de radiation électromagnétique (1) est constituée par un laser à semiconducteur ou une diode élctroluminescente.

10. Dispositif optique selon la revendication 1, **caractérisé par le fait que** tant le premier que le deuxième détecteur photoélectrique (3, 7) sont des photodiodes.

11. Dispositif optique selon la revendication 1, **caractérisé par le fait que** la membrane de pression (2) est conçue sous forme d'une plaque et que la membrane de pression (2) est constituée par au moins une partie d'un corps tubulaire ou qu'elle représente elle-même un corps tubulaire.

12. Dispositif optique selon la revendication 1, **caractérisé par le fait qu'**au moins la source de radiation électromagnétique (1), un détecteur photoélectrique (3, 7) et le corps (4) font partie d'un boîtier et que ce boîtier est muni d'éléments et/ou de composants servant de raccord.
